# FASCICULE DE BREVET EUROPEEN

(11) **EP 3 532 752 B1**
(45) Date de publication et mention de la délivrance du brevet: **12.08.2020**
(21) Numéro de dépôt: 17791339.9
(22) Date de dépôt: 24.10.2017
(51) Int. Cl.: F16H 61/4069, F16H 61/4148

(54) **SYSTÈME D'ASSISTANCE À L'ENTRAÎNEMENT DE VÉHICULE COMPRENANT UN CIRCUIT HYDRAULIQUE OUVERT**
FAHRZEUGANTRIEBSASSISTENZSYSTEM MIT OFFENEM HYDRAULIKKREIS
VEHICLE DRIVE ASSISTANCE SYSTEM COMPRISING AN OPEN HYDRAULIC CIRCUIT

(30) Priorité: 25.10.2016 FR 1660328
(43) Date de publication de la demande: 04.09.2019
(73) Titulaire: Poclain Hydraulics Industrie, 60410 Verberie (FR)
(72) Inventeur: HASENAU, Johannes, 60410 Verberie (FR); RAUSCHER, Andréas, 60410 Verberie (FR)
(74) Mandataire: Regimbeau
(86) Numéro de dépôt international: PCT/EP2017/077066
(87) Numéro de publication internationale: WO 2018/077829

(56) Documents cités:
- WO-A1-2012/123056
- DE-A1-102008 060 066
- FR-A1- 2 504 987
- FR-A1- 2 958 886

## Description

La présente invention concerne le domaine des circuits d'assistance dans l'entraînement de véhicules.

Plus précisément, la présente invention s'applique aux circuits hydrauliques de type ouvert, c'est-à-dire dans lesquels une pompe hydraulique d'alimentation du circuit aspire de l'huile dans un réservoir et le retour d'huile en sortie du circuit d'alimentation est renvoyé au réservoir (par opposition aux circuits dits fermés dans lesquels généralement une pompe de gavage est requise pour assurer le maintien d'une pression minimale dans le circuit fermé, lequel comprend une branche aller et une branche retour entre la pompe principale et les récepteurs hydrauliques du circuit, la boucle fermée ne passant pas par le réservoir, tandis que la pompe de gavage puise dans le réservoir pour maintenir la pression minimale de la boucle fermée).

La présente invention s'applique en particulier à l'entraînement de remorques.

On a déjà proposé de nombreux systèmes hydrauliques d'assistance à l'entraînement de véhicules, notamment de remorques.

On trouvera des exemples de systèmes connus dans les documents FR 2379394, EP 0399932, EP 0993982, FR 2935128 et WO2012/123056.

Un certain nombre des systèmes déjà proposés donne globalement satisfaction.

Cependant, la plupart des systèmes connus sont assez complexes et onéreux.

Un objectif principal de la présente invention est de proposer un système permettant une assistance à l'entraînement de véhicules à partir d'un circuit ouvert à deux lignes, respectivement d'alimentation et de retour au réservoir, utilisant des moteurs hydrauliques et autorisant une fonction roue libre.

Le but précité est atteint selon la présente invention, grâce à un système d'assistance à l'entraînement comprenant au moins une machine hydraulique formant pompe, au moins une machine hydraulique formant moteur et un circuit hydraulique ouvert passant par un réservoir et comprenant un conduit d'aspiration allant du réservoir vers une entrée de la pompe, un conduit d'alimentation allant de la sortie de pompe vers l'entrée d'un moteur et un conduit retour allant de la sortie du moteur vers le réservoir, caractérisé par le fait qu'au moins l'un des moteurs est un moteur débrayable et par le fait que le système comprend un élément formant restriction et créant une perte de charge sur le conduit retour et un distributeur adapté pour relier sélectivement au carter du moteur, la partie du conduit retour située en amont ou respectivement en aval de l'élément formant restriction.

Comme on le comprendra à la lecture de la description qui va suivre, l'invention permet d'éviter la nécessité d'une pompe de gavage.

L'invention concerne également un procédé de gestion d'un circuit d'assistance à l'entraînement d'un véhicule.

L'invention concerne également les véhicules équipés du système précité.

D'autres caractéristiques, buts et avantages de la présente invention apparaîtront à la lecture de la description détaillée qui va suivre et en regard des dessins annexés donnés à titre d'exemples non limitatifs et sur lesquels :
- la figure 1 représente une vue schématique de la structure de l'ensemble d'un circuit hydraulique conforme à la présente invention,
- la figure 2 représente une vue de détail des éléments principaux d'un circuit hydraulique conforme à la présente invention,
- la figure 3 représente une vue schématique en coupe transversale d'un moteur à pistons radiaux utilisé de préférence dans le cadre de la présente invention, et
- la figure 4 représente une vue schématique de la structure de l'ensemble d'un circuit hydraulique conforme à une variante de la présente invention.

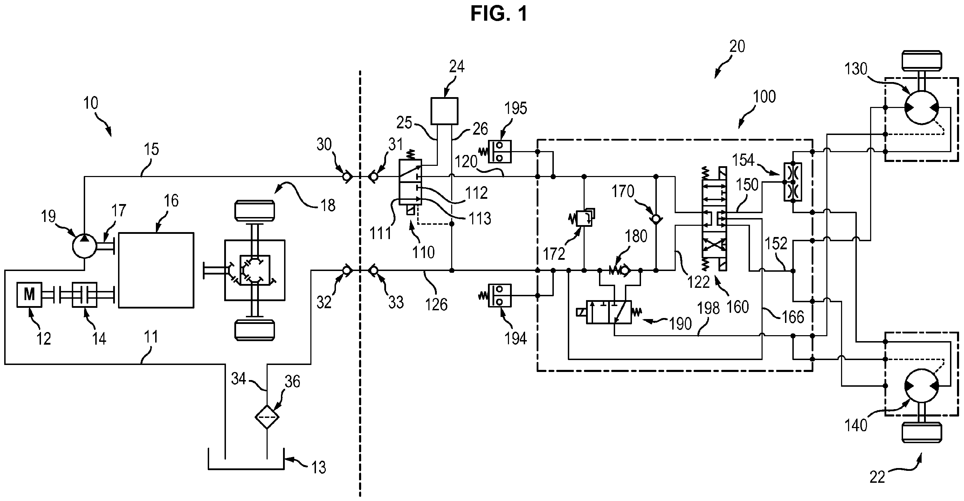

On aperçoit sur la figure 1, un véhicule tracteur référencé schématiquement 10 et une remorque référencée schématiquement 20.

Le véhicule tracteur 10 comprend un moteur principal 12, par exemple un moteur thermique, un embrayage 14 associé au moteur 12 et une boîte de vitesse 16 reliée à la sortie de l'embrayage et intercalée entre l'embrayage 14 et un essieu moteur 18.

On aperçoit également sur la figure 1, une prise de force 17 entrainée directement ou indirectement par le moteur principal 12 et placée à cette fin soit sur une sortie du moteur 12, soit en sortie de la boîte de vitesse 16 et une machine hydraulique formant pompe 19 entraînée par la prise de force 17.

Le véhicule tracteur 10 comprend de plus un réservoir 13, un conduit d'aspiration 11 qui relie le réservoir 13 à l'entrée de la pompe 19, un conduit d'alimentation 15 relié entre la sortie de la pompe 19 et un connecteur 30 et un conduit de retour 34 placé entre un connecteur 32 et le réservoir 13. Le véhicule tracteur 10 peut également comprendre un filtre 36 placé sur le conduit retour 34.

De façon connue en soi, la remorque 20 comprend un vérin 24, par exemple un vérin assurant une fonction de bennage. Le vérin 24 est associé à un conduit d'alimentation 25 et à un conduit de retour 26. Les conduits d'alimentation 25 et de retour 26 sont reliés à des connecteurs respectifs 31 et 33 destinés à venir respectivement en prise, en liaison hydraulique, avec les connecteurs 30 et 32 précités.

Ainsi, lorsque la pompe 19 est activée, le vérin 24 est alimenté par l'intermédiaire des liaisons 15 et 25 et les connecteurs 30, 31. Lorsque le circuit hydraulique est désactivé, le vérin 24 peut se décharger via la ligne de retour 26, les connecteurs 32, 33 et la ligne 34, vers le réservoir 13.

Dans le cadre de la présente invention, le dispositif précité permettant l'alimentation d'un vérin 24 sur la remorque 20 à l'aide d'un circuit hydraulique ouvert, comprend en outre un circuit d'assistance à l'entraînement 100 et un distributeur 110 permettant une sélection entre l'alimentation du vérin 24 précité ou le circuit d'assistance 100.

Le distributeur 110 est de préférence de type trois voies, deux positions.

Une entrée 111 du distributeur 110 est reliée au connecteur 31. Deux sorties 112, 113 du distributeur 110 sont reliées respectivement au conduit d'alimentation 25 du vérin 24 et à une ligne d'alimentation 120 du circuit d'assistance 100.

Dans une première position du distributeur 110, l'entrée 111 est reliée à la sortie 112. Le vérin 24 est alors alimenté, tandis que le circuit d'entraînement d'assistance à l'entraînement 100 n'est pas alimenté.

Dans la seconde position du distributeur 110, inversement, l'entrée 111 est reliée à la sortie 113. Dans ce cas le vérin 24 n'est pas alimenté et au contraire le circuit d'assistance à l'entraînement 100 est alimenté par la ligne d'alimentation et les connecteurs 30, 31.

Le circuit d'assistance à l'entraînement 100 comprend au moins deux moteurs 130, 140 associés respectivement aux roues droite et gauche de l'essieu 22.

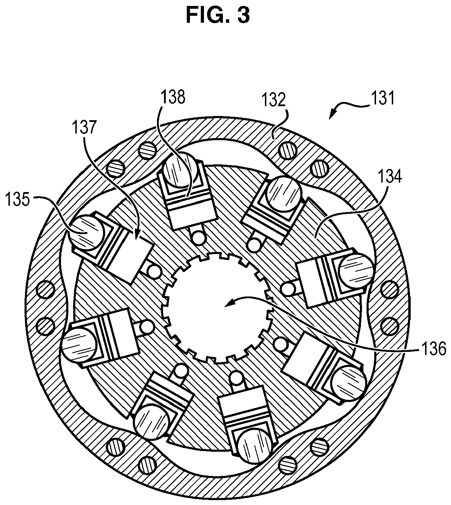

Les machines hydrauliques formant les moteurs 130, 140 sont de préférence des moteurs à pistons radiaux du type illustré sur la figure 3 annexée.

De préférence, les machines hydrauliques formant moteurs 130, 140 sont plus précisément des moteurs à pistons rétractables.

La structure de tels moteurs 130, 140, est bien connue en soi de l'homme de l'art et ne sera donc pas décrite dans le détail par la suite. La société POCLAIN HYDRAULICS fabrique et commercialise elle-même de nombreux moteurs à pistons radiaux du type schématisé sur la figure 3 annexée.

On rappelle cependant, que de préférence, les moteurs hydrauliques à pistons radiaux du type illustré sur la figure 3 comprennent dans un carter 131 :
- une came multi-lobes 132 formée de préférence sur la surface interne d'un élément du carter,
- un bloc cylindres 134 monté à rotation relative dans le carter 131,
- un arbre 136 lié à rotation au bloc cylindres 134,
- des pistons 138 guidés à coulissement radial dans des cylindres respectifs 137 du bloc cylindres et prenant appui sur les lobes de la came 132, de préférence par l'intermédiaire de galets 135.

Les moteurs à pistons radiaux du type illustré sur la figure 3 comprennent également (non représenté sur la figure 3) un distributeur adapté pour appliquer successivement de manière contrôlée un fluide sous pression dans les cylindres 137 et par conséquent sur les pistons 138, de sorte que l'appui successif des pistons 138, par l'intermédiaire des galets 135, sur les lobes de la came 132 entraine la rotation relative du bloc cylindre 134 et des éléments qui lui sont liés par rapport au carter 131.

Pour être débrayables, les pistons 138 et galets associés 135 doivent être rétractés dans les cylindres 137 de sorte que les galets 135 échappent à la came 132.

La rétractation des galets 135 et pistons 138 associés, pour obtenir le débrayage des moteurs 130, 140 est opérée grâce à l'application d'une pression adéquate dans le carter du moteur, c'est-à-dire dans la chambre comprise entre la came multi-lobes 132 et l'espace extérieur du bloc cylindre 134. La pression ainsi exercée par le fluide s'applique sur les pistons 138 et rétracte ceux-ci dans les cylindres 137.

La rétractation des pistons qui correspond à une opération de décrabotage peut également être aidée par des ressorts. Ceux-ci sont généralement placés sur le côté des pistons pour tirer ceux-ci vers le centre du bloc-cylindres. La structure, la position et le fonctionnement de tels ressorts opérant une sollicitation en position rétractée des pistons sont connus en soit de l'homme du métier et ne seront donc pas décrits plus en détail par la suite. On trouvera à titre indicatif et non limitatif des informations dans les documents FR 2 426 812, FR 2 651836 et FR 2 504 987.

La rétractation des pistons 138 peut se faire uniquement par une pression de carter, ou conjointement par une pression de carter et la sollicitation de ressorts, par exemple en appliquant une pression de carter au moment de la rentrée des pistons, tandis que des ressorts suffisent à garder les pistons rétractés.

Comme on le voit sur la figure 1, les moteurs 130 et 140 sont reliés en parallèle. A cette fin, le circuit hydraulique 100 comprend une ligne haute pression 150 et une ligne basse pression 152. Une entrée de chaque moteur 130, 140 est reliée à la ligne haute pression 150, de préférence par l'intermédiaire d'un répartiteur diviseur de débit 154. La structure d'un tel diviseur de débit est connue en soi de l'homme de l'art et ne sera pas décrite dans le détail par la suite.

Les sorties des moteurs 130, 140 sont également reliées en parallèle à la ligne basse pression 152.

Le circuit 100 comprend de plus une ligne retour 122 reliée à la ligne de retour 126 et au connecteur 33 destiné à être mis en prise avec le connecteur de retour 32.

Le circuit 100 comprend un distributeur 160 cinq voies, trois positions intercalé entre, d'une part la ligne d'alimentation 120 et la ligne de retour 122 et, d'autre part la ligne haute pression 150 et la ligne basse pression 152.

Les entrées 161, 162 du distributeur 160 sont reliées respectivement à la ligne d'alimentation 120 et à la ligne de retour 122.

Une première sortie 163 du distributeur 160 est reliée aux entrées des moteurs 130, 140, plus précisément à l'entrée du diviseur 154.

Une deuxième sortie 164 du distributeur 160 est reliée aux sorties des moteurs 130, 140.

La troisième sortie 165 du distributeur 160 est reliée à la ligne de retour 122 par une conduite 166.

Dans une première position, de repos, les deux entrées 161, 162 du distributeur 160 sont reliées entre elles et les trois sorties 163, 164, 165 du même distributeur 160 sont également reliées entre elles. Dans cette position, le circuit d'assistance est court-circuité. Lorsque l'assistance est sélectionnée mais non activée, et non pas l'alimentation du vérin 24, l'huile pompée par la pompe 19 est retournée au réservoir 13 par les lignes de retour 122, 126. Les moteurs 130, 140 ne sont pas alimentés, et sont reliés au réservoir d'huile sans pression 13. En effet leurs lignes haute pression 150 et basse pression 152 sont reliées au réservoir 13 par l'intermédiaire de la sortie 165 et de la conduite 166 qui forme une ligne de vidange des moteurs.

Dans une deuxième position du distributeur 160, la première entrée 161 est reliée à la sortie 163 et la deuxième entrée 162 est reliée à la deuxième sortie 164. Les moteurs 130, 140 sont alors alimentés par la pompe 19 par l'intermédiaire des conduits 120, 122 dans le sens avant correspondant à un premier sens de rotation de moteur.

Au contraire, dans la troisième position du distributeur 160, la première entrée 161 est reliée à la deuxième sortie 164 et la deuxième entrée 162 est reliée à la première sortie 163. Les moteurs 130, 140 sont alors entraînés dans le sens de rotation opposé, en marche arrière.

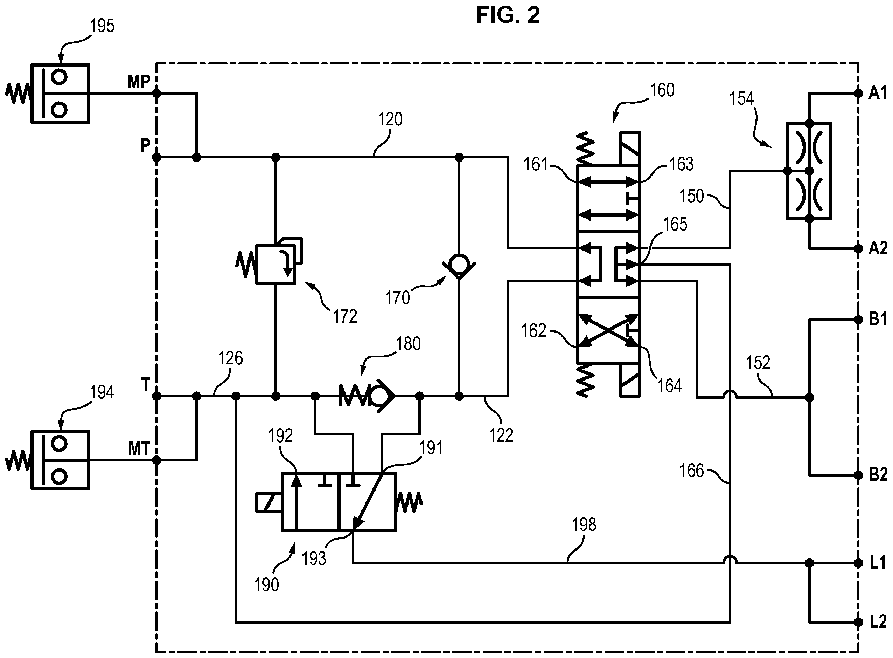

Le circuit 100 représenté sur les figures 1 et 2 comprend également un clapet anti-retour 170 placé entre la ligne d'alimentation 120 et la ligne de retour 122. Le clapet 170 est bloquant dans le sens allant de la ligne d'alimentation 120 vers la ligne de retour 122. Il est au contraire passant dans le sens allant de la ligne de retour 122 vers la ligne d'alimentation 120. Le clapet 170 est de préférence taré à 0 bar.
- Le clapet 170 est un clapet de recirculation utile dans le cas où la vitesse du véhicule dépasse la vitesse maximale admissible par le système de transmission hydraulique par exemple quand la vitesse correspond à un débit supérieur au débit de la pompe.

Un limiteur de pression 172 est placé entre la ligne d'alimentation 120 et la ligne de retour 122. A titre d'exemple non limitatif, le limiteur de pression 172 peut être taré à 350 bars. Il permet de limiter la pression sur la ligne haute pression 150 en évacuant, vers le réservoir 13, toute pression additionnelle.

Selon l'invention, il est prévu en outre entre les points de liaison du clapet anti-retour 170 et du limiteur de pression 172 sur la ligne de retour 122 un élément 180 formant restriction. Cet élément formant restriction 180 est associé à un distributeur sélecteur 190. Le distributeur 190 est de préférence à trois voies, deux positions.

La restriction 180 est formée par exemple d'un clapet taré à 6 bars passant dans le sens allant vers le réservoir 13.

En variante, la restriction 180 peut être formée d'un gicleur, d'une simple restriction, d'un limiteur de pression, ou de tout moyen équivalent définissant une perte de charge.

Le distributeur 190 a deux entrées 191, 192 reliées respectivement en amont et en aval de la restriction 180. On attend par amont le côté de la restriction 180 situé du côté de la ligne d'alimentation et par aval le côté de la restriction 180 situé du côté réservoir 13.

La sortie 193 du distributeur 190 est reliée au carter des moteurs 130, 140 par l'intermédiaire d'un conduit 198.

Dans une première position, le distributeur 190 a son entrée 191 reliée à sa sortie 193. Le carter des moteurs est alors relié à la pression provenant de la ligne de retour 122 en amont de la restriction 180.

Au contraire, dans la deuxième position du distributeur 190, la sortie 193 est reliée à la seconde entrée 192. Le carter des moteurs 130, 140 est alors placé à la pression située immédiatement en aval de la restriction 180.

Le distributeur 190 peut être commandé par un capteur de température 194 mesurant la température sur la ligne de retour 122 en aval de la restriction 180 et un capteur de pression 195 mesurant la pression de l'huile dans le circuit, par exemple au niveau du conduit d'alimentation 120.

L'information issue du capteur de température 194 permet au calculateur du système de forcer le désengagement de l'assistance dans le cas où la température est supérieure à un seuil fixé.

Le capteur de pression 195 permet de détecter et forcer le désengagement du système d'assistance si le débit imposé par la vitesse de rotation des roues est supérieur à celui que peut fournir la pompe 19.

Cet état est détecté par le capteur 195 puisqu'un débit imposé par une vitesse de rotation des roues supérieure à celui que peut fournir la pompe 19 entraîne une chute de pression dans la branche d'alimentation.

Selon le niveau de pression ainsi disponible et la température de l'huile, le distributeur 190 est commuté pour appliquer sur le carter des moteurs 130, 140, soit la pression en aval de la restriction 180, soit la pression disponible en amont de la restriction 180, pour assurer une pression minimale dans le carter des moteurs 130, 140.

La restriction 180 associée au distributeur 190 permet de créer une pression de commande des carters moteurs sans nécessiter l'utilisation d'une pompe de gavage, ou d'une pompe auxilliaire. Cette pression de carter permet de placer les pistons 138 en position rétractée dans les cylindres 137. Ceci permet que le rotor 136 des moteurs 130, 140 tourne par rapport au stator sans générer de couple de sortie, correspondant à une position « roue libre ». Suivant que les pistons sont rétractés ou au contact de la came, le moteur est dit désengagé ou engagé, ou décraboté et craboté, les pistons réalisant avec la came une fonction de doigts de crabot.

Le contrôle de la pression dans les carters des moteurs peut permettre un contrôle progressif de l'évolution de la pression appliquée sur les pistons et peut permettre par conséquent d'éviter tout claquement des pistons et galets 135 sur la came multi-lobée 132 lors de l'embrayage.

L'homme de l'art comprendra donc que la restriction 180 associée au distributeur 190 conforme à l'invention permet de créer une pression adéquate dirigée vers les carters du moteur, qui est particulièrement utile lors de l'engagement ou du désengagement des moteurs.

On a décrit précédemment l'invention en référence à l'application à une remorque 20 destinée à être tractée par un véhicule tracteur 10 et comportant un circuit d'assistance à l'entraînement. Le véhicule tracteur est par exemple un tracteur de camion articulé ou semi-remorque.

L'invention n'est pas cependant limitée à l'application à une remorque. L'invention peut s'appliquer à l'assistance à l'entraînement de tout véhicule sans remorque, par exemple par l'entrainement d'un essieu non motorisé d'un véhicule. D'une manière préférée, le circuit de l'invention s'applique particulièrement bien aux moteurs à pistons radiaux et came multilobe débrayables par rétractation des pistons dans le bloc, et tournant à la vitesse de l'arbre qu'ils entraînent, et en particulier tournant à la vitesse des roues, ou à la vitesse de l'arbre d'entrée d'un essieu.

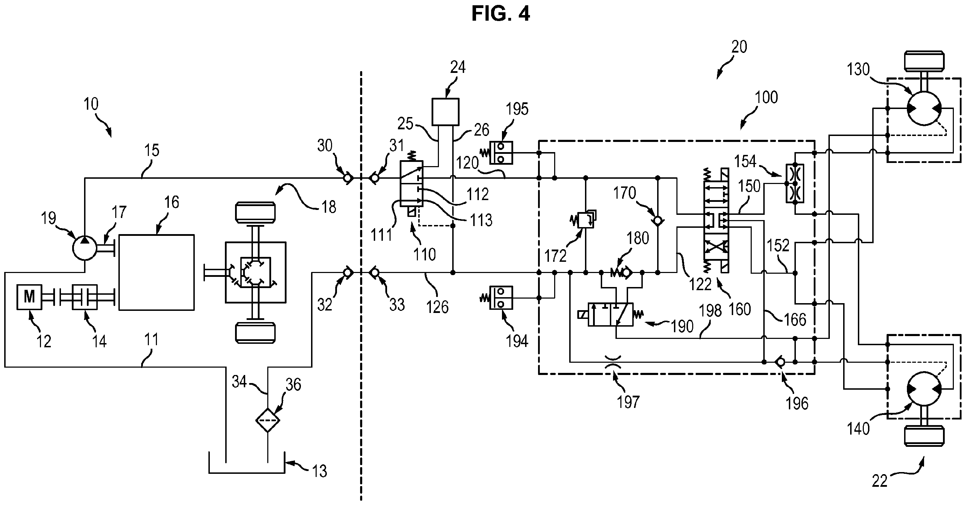

On a représenté sur la figure 4 une variante de réalisation conforme à la présente invention dans laquelle le circuit hydraulique comprend en outre un clapet de recirculation 196 qui relie la sortie 165 du distributeur 160 et la ligne reliée au carter des moteurs 130, 140.

Le clapet de recirculation 196 est passant dans le sens allant de la sortie 165 du distributeur 160 vers la ligne reliée au carter des moteurs 130, 140. Ce clapet est un simple clapet antiretour, cependant, pour des raisons de stabilité et d'étanchéité en fonctionnement, on peut choisir un clapet équipé d'une ressort faiblement taré. D'une manière préférée, Il est taré à une valeur inférieure à la pression régnant dans les conduits d'alimentation et de retour des moteurs 130 et 140 au moment de la rentrée des pistons, quand le distributeur 160 est en position centrale de court-circuit des moteurs, par exemple taré à 0,3 bar. Idéalement le tarage du clapet de recirculation 196 est le plus faible possible pour ne pas perturber l'effet de ressorts configurés pour assurer le décrabotage des pistons.

Ainsi le clapet de recirculation 196 relie les lignes d'alimentation 150 et de retour 152 des moteurs 130, 140, au carter des moteurs, en position non alimentée des moteurs.

Le clapet de recirculation 196 permet de diriger vers le carter des moteurs 130, 140 l'huile qui est refoulée par le déplacement des pistons 138 par la came 132.

L'on évite ainsi que si les pistons 138 tendent à rentrer lentement dans le bloc cylindres lors de la désactivation des moteurs, car le débit venant de la pompe ne suffit pas à remplir les carters des moteurs 130, 140 assez vite, les pistons 138 partiellement rentrés ne tapent sur la came 132.

Grâce au clapet de recirculation 196, si la came 132 chasse des pistons 138, l'excès de pression locale des lignes alimentation et retour des moteurs est évacué vers le carter des moteurs, par l'intermédiaire du clapet 196, puisque dans cet état les sorties 163, 164 et 165 du distributeur 160 sont reliées entre elles. Le carter des moteurs 130, 140 se remplit ainsi instantanément quand les pistons 138 rentrent dans le bloc cylindres. L'huile qui est évacuée d'un côté d'un piston 138 se retrouve dans le carter de l'autre côté. Le système fonctionne à équivolume d'huile déplacée.

Ainsi grâce au clapet de recirculation 196 tous les pistons 138 sont rentrés par la came 132 et ne risquent pas de ressortir sur une fraction de tour. Le carter est instantanément rempli, sans attendre que de l'huile ne vienne depuis la pompe 19.

La pompe 19 sert essentiellement à maintenir la pression de carter souhaitée dans les moteurs pour garder les pistons 138 en position rétractée.

L'on aperçoit également, sur la figure 4, sur le tronçon de ligne qui relie la troisième sortie 165 du distributeur 160 à la ligne de retour 126, et en aval du clapet de recirculation 196, une restriction 197.

La restriction 197 est ainsi placée sur un tronçon de ligne situé entre l'entrée du clapet de recirculation 196 et la ligne de retour 126.

Cette restriction 197 a pour fonction de créer une perte de charge qui permet une montée en pression temporaire sur l'entrée du clapet de recirculation 196, au moment de la mise en court circuit des moteurs par le distributeur 160 et ainsi faire passer l'huile refoulée par les moteurs 130, 140 par le clapet de recirculation 196.

Une telle restriction 197 peut être formée soit par la ligne de liaison en elle-même qui conduit de la sortie 165 du distributeur 160 à la ligne de retour 126 si cette ligne de liaison correspond à une perte de charge suffisante, par exemple si la longueur de conduite crée suffisament de perte de charge, dans ce cas la perte de charge 197 représentée sert à représenter fictivement la perte de charge de la ligne pour la compréhension du phénoméne, soit par une restriction rajoutée sur cette ligne de liaison, si la perte de charge dans la ligne n'est pas suffisante . Dans ce dernier cas la restriction 197 peut être formée par exemple et non limitativement par un gicleur ou une réduction locale de diamètre de la ligne de liaison.

L'on observera que le volume d'huile expulsé pour rentrer les pistons 138 étant égal au volume injecté dans le carter des moteurs 130, 140, la restriction ou perte de charge 197 ne gêne en rien la rétractation des pistons 138 puisqu'il n'y a pratiquement pas de débit d'huile dans cette ligne lors de la phase de rétractation des pistons.

L'homme de l'art comprendra que la présente invention offre de nombreux avantages par rapport à l'état de la technique.

Le circuit hydraulique d'assistance à l'entraînement conforme à l'invention est simple et économique. Il permet de réutiliser le circuit connu de véhicules existants équipés de moyens pour assurer un bennage, disponibles sur un tracteur.

Le circuit de l'invention autorise également une position roue libre. Le système conforme à l'invention ne nécessite que deux lignes de liaison. Le système conforme à l'invention permet de disposer d'une assistance à l'entraînement par un ajout simple sur un système connu existant sur un véhicule tracteur sans avoir d'impact sur l'équipement pré-existant notamment destiné à un bennage, celui-ci restant fonctionnel.

L'invention permet un parfait contrôle de sécurité.

En outre, sans exiger de pompe de gavage ou auxilliaire, la présente invention permet en recréant une pression appliquée au carter de moteurs, un engagement silencieux lorsque les galets 135 sont déplacés en appui contre la came multi-lobes 132, tout en autorisant un désengagement rapide grâce à la pression carter.

Le système d'assistance décrit dans la présente demande et basé sur les moteurs hydrauliques 130, 140 peut être placé sur d'autres roues que celles d'une remorque. Il peut en utilisant la pompe 19 d'accessoires hydrauliques en boucle ouverte être associé par exemple à des essieux porteurs d'un camion, notamment un essieu avant directionnel, de multiples essieux directionnels, des essieux relevables, etc ...

## Revendications

1. Système d'assistance à l'entraînement d'un véhicule comprenant au moins une machine hydraulique formant pompe (19), au moins une machine hydraulique formant moteur (130, 140) et un circuit hydraulique (100) ouvert passant par un réservoir (13) et comprenant un conduit d'aspiration (11) allant du réservoir (13) vers une entrée de la pompe (19), un conduit d'alimentation (15) allant de la sortie de la pompe (19) vers l'entrée de la machine hydraulique formant moteur (130, 140) et un conduit de retour (122) allant de la sortie de la machine hydraulique formant moteur (130, 140) vers le réservoir (13), **caractérisé par le fait que** le moteur (130, 140) est un moteur débrayable et **par le fait que** le système comprend un élément (180) formant restriction et créant une perte de charge sur le conduit retour (122) et un distributeur (190) adapté pour relier sélectivement au carter du moteur (130, 140), la partie du conduit retour (122) située en amont ou respectivement en aval de l'élément formant restriction (180).

2. Système selon la revendication 1, **caractérisé par le fait que** l'élément formant restriction (180) est un clapet anti-retour taré à 6 Bar passant dans le sens allant vers le réservoir (13).

3. Système selon l'une des revendications 1 ou 2, **caractérisé par le fait que** l'élément formant restriction (180) est choisi dans le groupe comprenant un gicleur, une restriction, ou un limiteur de pression.

4. Système selon l'une des revendications 1 à 3, **caractérisé par le fait que** le distributeur (190) adapté pour relier sélectivement au carter du moteur (130, 140) la partie du conduit retour située en amont ou respectivement en aval de l'élément formant restriction (180), est un distributeur trois voies, deux positions dont les entrées sont reliées au conduit de retour (122) de part et d'autre de l'élément formant restriction (180), tandis que la sortie (193) du distributeur est reliée au carter des moteurs (130, 140).

5. Système selon l'une des revendications 1 à 4, **caractérisé par le fait que** la pression du fluide appliquée sur le carter des moteurs (130, 140) assure le maintien en position rétractée des pistons (138) dans leur cylindre respectif (137).

6. Système selon l'une des revendications 1 à 5, **caractérisé par le fait qu'**il comprend un limiteur de pression (172) placé entre la ligne d'alimentation (120) et la ligne de retour (122).

7. Système selon l'une des revendications 1 à 6, **caractérisé par le fait qu'**il comprend un clapet anti-retour (170), de préférence taré à 0 bar, connecté entre une ligne d'alimentation (120) et une ligne de retour (122) et passant dans le sens allant vers la ligne d'alimentation (120).

8. Système selon l'une des revendications 1 à 7, **caractérisé par le fait qu'**il est installé sur une remorque et adapté pour être relié par l'intermédiaire de connecteurs appropriés (31, 33) à une pompe (19) placée sur un véhicule tracteur (10).

9. Système selon l'une des revendications 1 à 8, **caractérisé par le fait que** la machine hydraulique formant moteur est de type à pistons radiaux et came multilobe, débrayable par désengagement des pistons et de la came.

10. Système selon l'une des revendications 1 à 9, **caractérisé par le fait qu'**il comprend un distributeur (160) trois positions adapté pour assurer l'alimentation de la machine hydraulique formant moteur (130, 140) dans un premier sens, l'alimentation du même moteur (130, 140) dans le sens opposé et pour définir une position de non alimentation du moteur (130, 140) correspondant à une position en roue libre.

11. Système selon l'une des revendications 1 à 10, **caractérisé par le fait qu'**il comprend un clapet de recirculation (196) qui relie les lignes d'alimentation et de retour de la machine hydraulique formant moteur, au carter du moteur, en position non alimentée du moteur.

12. Système selon la revendication 11, **caractérisé par le fait qu'**il comprend une restriction (197) sur un tronçon de ligne situé entre l'entrée du clapet de recirculation (196) et une ligne de retour (126).

13. Procédé de gestion du système d'assistance à l'entraînement conforme à l'une des revendications 1 à 12, **caractérisé par le fait qu'**il comprend l'étape consistant à sélectionner l'un des côtés de l'élément formant restriction (180) en fonction de la pression régnant en aval de celui-ci pour relier sélectivement au carter des moteurs (130, 140) la partie du conduit retour (122) située en amont ou respectivement en aval de l'élément formant restriction.

14. Véhicule équipé d'un système conforme à l'une des revendications 1 à 12.

## Patentansprüche

1. Fahrzeugantriebsassistenzsystem, mindestens eine, eine Pumpe (19) bildende Hydraulikmaschine, mindestens eine, einen Motor (130, 140) bildende Hydraulikmaschine und einen offenen Hydraulikkreis (100) umfassend, der durch einen Tank (13) verläuft und eine Saugleitung (11), die vom Tank (13) zu einem Eingang der Pumpe (19) führt, eine Versorgungsleitung (15), die vom Ausgang der Pumpe (19) zum Eingang der einen Motor (130, 140) bildenden Hydraulikmaschine führt, und eine Rückführleitung (122), die vom Ausgang der einen Motor (130, 140) bildenden Hydraulikmaschine zum Tank (13) führt, umfasst, **dadurch gekennzeichnet, dass** der Motor (130, 140) ein auskuppelbarer Motor ist, und dadurch, dass System ein Element (180) umfasst, das eine Einengung bildet und für einen Druckverlust in der Rückführleitung (122) sorgt, und ein Wegeventil (190), das ausgeführt ist, um selektiv den Teil der Rückführleitung (122) mit dem Gehäuse des Motors (130, 140) zu verbinden, der sich stromaufwärts oder jeweils stromabwärts des Elements, das eine Einengung (180) bildet, befindet.

2. System nach Anspruch 1, **dadurch gekennzeichnet, dass** das Element, das eine Einengung bildet (180), ein auf 6 bar tariertes Rückschlagventil ist, das in die Richtung, die zum Tank (13) führt, verläuft.

3. System nach einem der Ansprüche 1 oder 2, **dadurch gekennzeichnet, dass** das Element, das eine Einengung bildet (180), aus der Gruppe ausgewählt wird, die eine Düse, eine Einengung oder einen Druckbegrenzer umfasst.

4. System nach einem der Ansprüche 1 bis 3, **dadurch gekennzeichnet, dass** das Wegeventil (190), das ausgeführt ist, um selektiv den Teil der Rückführleitung mit dem Gehäuse des Motors (130, 140) zu verbinden, der sich stromaufwärts oder jeweils stromabwärts des Elements, das eine Einengung bildet (180), befindet, ein 3-Wege-Ventil mit zwei Positionen ist, dessen Eingänge mit der Rückführleitung (122) beiderseits des Elements, das eine Einengung bildet (180), verbunden ist, während der Ausgang (193) des Wegeventils mit dem Gehäuse der Motoren (130, 140) verbunden ist.

5. System nach einem der Ansprüche 1 bis 4, **dadurch gekennzeichnet, dass** der Druck der Flüssigkeit, der an dem Gehäuse der Motoren (130, 140) angelegt wird, für das Halten in der eingezogenen Position der Kolben (138) in ihrem jeweiligen Zylinder (137) sorgt.

6. System nach einem der Ansprüche 1 bis 5, **dadurch gekennzeichnet, dass** es einen Druckbegrenzer (172) umfasst, der zwischen der Versorgungsleitung (120) und der Rückführleitung (122) platziert ist.

7. System nach einem der Ansprüche 1 bis 6, **dadurch gekennzeichnet, dass** es ein Rückschlagventil (170), vorzugsweise auf 0 bar tariert, umfasst, das zwischen einer Versorgungsleitung (120) und einer Rückführleitung (122) angeschlossen ist, und in die Richtung verläuft, die zur Versorgungsleitung (120) führt.

8. System nach einem der Ansprüche 1 bis 7, **dadurch gekennzeichnet, dass** es auf einem Anhänger installiert ist und ausgeführt ist, um über geeignete Anschlüsse (31, 33) mit einer Pumpe (19) verbunden zu werden, die auf einem Zugfahrzeug (10) platziert ist.

9. System nach einem der Ansprüche 1 bis 8, **dadurch gekennzeichnet, dass** die einen Motor bildende Hydraulikmaschine vom Typ mit radialen Kolben und mehrlappigem Nocken ist, der durch Trennen der Kolben und des Nockens auskuppelbar ist.

10. System nach einem der Ansprüche 1 bis 9, **dadurch gekennzeichnet, dass** es ein 3-Positions-Wegeventil (160) umfasst, das ausgeführt ist, um für die Versorgung der einen Motor (130, 140) bildenden Hydraulikmaschine in einer ersten Richtung, die Versorgung desselben Motors (130, 140) in der entgegengesetzten Richtung zu sorgen und um eine Nichtversorgungsposition des Motors (130, 140) zu definieren, die einer Leerlaufposition entspricht.

11. System nach einem der Ansprüche 1 bis 10, **dadurch gekennzeichnet, dass** es eine Umwälzklappe (196) umfasst, die die Versorgungs- und Rückführungsleitung der einen Motor bildenden Hydraulikmaschine mit dem Gehäuse des Motors in der Nichtversorgungsposition des Motors verbindet.

12. System nach Anspruch 11, **dadurch gekennzeichnet, dass** es eine Einengung (197) auf einem Leitungsabschnitt umfasst, der sich zwischen dem Eingang der Umwälzklappe (196) und einer Rückführleitung (126) befindet.

13. Verfahren zur Steuerung des Antriebsassistenzsystems nach einem der Ansprüche 1 bis 12, **dadurch gekennzeichnet, dass** es den Schritt umfasst, der darin besteht, die eine der Seiten des Elements, das eine Einengung bildet (180) in Abhängigkeit von dem Druck auszuwählen, der stromabwärts desselben vorherrscht, um selektiv den Teil der Rückführleitung (122) mit dem Gehäuse des Motors (130, 140) zu verbinden, der sich stromaufwärts oder jeweils stromabwärts des Elements, das eine Einengung bildet, zu verbinden.

14. Fahrzeug, das mit einem System nach einem der Ansprüche 1 bis 12 ausgerüstet ist.

## Claims

1. Vehicle drive assistance system comprising at least one pump-forming hydraulic machine (19), at least one motor-forming hydraulic machine (130, 140) and an open hydraulic circuit (100) passing through a tank (13) and comprising a suction duct (11) extending from the tank (13) to an inlet of the pump (19), a supply duct (15) extending from the outlet of the pump (19) to the inlet of the motor-forming hydraulic machine (130, 140) and a return duct (122) extending from the outlet of the motor-forming hydraulic machine (130, 140) to the tank (13), **characterised by** the fact that the motor (130, 140) is a disengageable motor and by the fact that the system comprises a restriction-forming element (180) that creates a pressure drop on the return duct (122) and a distributor (190) suitable for selectively connecting, to the motor casing (130, 140), the part of the return duct (122) situated upstream or respectively downstream from the restriction-forming element (180).

2. System according to claim 1, **characterised by** the fact that the restriction-forming element (180) is a non-return valve tared to 6 Bar passing in the direction extending to the tank (13).

3. System according to one of claims 1 or 2, **characterised by** the fact that the restriction-forming element (180) is selected from the group comprising a sprinkler, a restriction, or a pressure limiter.

4. System according to one of claims 1 to 3, **characterised by** the fact that the distributor (190) suitable for connecting selectively to the motor casing (130, 140), the part of the return duct situated upstream or respectively downstream from the restriction-forming element (180), is a three-path distributor, two positions from which the inlets are connected to the return duct (122) on either side of the restriction-forming element (180), while the outlet (193) of the distributor is connected to the motor casing (130, 140).

5. System according to one of claims 1 to 4, **characterised by** the fact that the pressure of the fluid applied on the motor casing (130, 140) ensures the maintenance in the retracted position of the pistons (138) in the respective cylinder (137) thereof.

6. System according to one of claims 1 to 5, **characterised by** the fact that it comprises a pressure limiter (172) placed between the supply line (120) and the return line (122).

7. System according to one of claims 1 to 6, **characterised by** the fact that it comprises a non-return valve (170), preferably tared to 0 Bar, connected between a supply line (120) and a return line (122) and passing in the direction extending to the supply line (120).

8. System according to one of claims 1 to 7, **characterised by** the fact that it is installed on a trailer and suitable for being connected by way of suitable connectors (31, 33) to a pump (19) placed on a towing vehicle (10).

9. System according to one of claims 1 to 8, **characterised by** the fact that the motor-forming hydraulic machine is of the radial piston and multilobe cam-type, disengageable by disengaging the pistons and the cam.

10. System according to one of claims 1 to 9, **characterised by** the fact that it comprises a three-position distributor (160) suitable for ensuring the supply of the motor-forming hydraulic machine (130, 140) in a first direction, the supply of the same motor (130, 140) in the opposite direction and to define the unsupplied position of the motor (130, 140) corresponding to a freewheeling position.

11. System according to one of claims 1 to 10, **characterised by** the fact that it comprises a recirculation valve (196) which connects the supply and return lines of the motor-forming hydraulic machine, to the motor casing, in the unsupplied position of the motor.

12. System according to claim 11, **characterised by** the fact that it comprises a restriction (197) on a line section situated between the inlet of the recirculation valve (196) and a return line (126).

13. Method for managing the drive assistance system according to one of claims 1 to 12, **characterised by** the fact that it comprises the step consisting of selecting one of the sides of the restriction-forming element (180) according to the pressure downstream from it to selectively connect to the motor casing (130, 140), the part of the return duct (122) situated upstream or respectively downstream from the restriction-forming element.

14. Vehicle equipped with a system according to one of claims 1 to 12.
